(19) Europäisches Patentamt

European Patent Office

Office européen des brevets

(11) Veröffentlichungsnummer: **0 044 810**
**B1**

(12) **EUROPÄISCHE PATENTSCHRIFT**

(45) Veröffentlichungstag der Patentschrift:
21.09.83

(21) Anmeldenummer: 81810285.7

(22) Anmeldetag: 13.07.81

(51) Int. Cl.³: **C 09 D 3/49,** C 08 L 101/00,
C 08 L 53/00, C 09 D 7/00,
B 05 D 7/16

(54) **Wässrige Suspension zur Herstellung matter Überzüge.**

(30) Priorität: 18.07.80 CH 5542/80

(43) Veröffentlichungstag der Anmeldung:
27.01.82 Patentblatt 82/4

(45) Bekanntmachung des Hinweises auf die Patenterteilung:
21.09.83 Patentblatt 83/38

(84) Benannte Vertragsstaaten:
**CH DE FR GB IT LI SE**

(56) Entgegenhaltungen:
**DE-A-1 905 720**
**DE-A-2 600 431**
**DE-A-2 716 118**

(73) Patentinhaber: **CIBA-GEIGY AG, Patentabteilung**
**Postfach, CH-4002 Basel (CH)**

(72) Erfinder: **Lauterbach, Horst, Dr., Im Mühleboden 78,**
**CH-4106 Therwil (CH)**

### Wässerige Suspension zur Herstellung matter Überzüge

Die Herstellung von homogenen, dünnen Überzügen aus wässerigen Suspensionen ist bekannt. Beispielsweise werden in der DE-OS 27 16 118 lagerstabile, wässerige Lacksysteme auf Kunstharzbasis beschrieben. Es lassen sich damit auf Metalloberflächen homogene, dichtgeschlossene Lackfilme mit hohem Glanz und einer Struktur, wie sie von Pulverlacken bekannt ist, erzielen.

Zusätze, wie sie in wässerigen Lacken häufig verwendet werden, wie z.B. Polyäthylenglykol, Polyvinylpyrrolidon oder Glycerin, haben im allgemeinen keinen oder keinen nennenswerten Mattierungseffekt. Andere Hilfsmittel für wässerige Lacke, wie Methylcellulose, Carboxymethylcellulose oder Polyacrylsäure, ergeben bereits in geringer Menge ernsthafte Störungen: Der Film weist keine oder eine zu geringe Flexibilität auf, bricht leicht und zeigt Verlaufsstörungen, Nadelstiche und Poren.

Es wurde nun gefunden, dass mit einem Zusatz von Polyvinylalkohol (PVA) zu wässerigen Suspensionen von Bindemitteln und andern, für Lacke üblichen Zusätzen ein Lack hergestellt werden kann, der auf Oberflächen Überzüge mit mattem Aussehen bildet. Dabei treten die im allgemeinen durch Mattierungsmittel verursachten Nachteile, nämlich schlechterer Verlauf und schlechtere mechanische Eigenschaften des Films, nicht auf.

Die Erfindung betrifft daher eine wässerige Suspension zur Herstellung von matten Überzügen, welche mindestens ein härtbares Bindemittel, übliche Zusätze für Lacke und gegebenenfalls Füllstoffe enthält, und dadurch gekennzeichnet ist, dass sie als Mattierungsmittel einen Polyvinylalkohol mit einem Molekulargewicht von 1000 bis 100 000, vorzugsweise von 5000 bis 50 000, gelöst enthält.

Vorzugsweise enthält die Suspension 1 bis 20 Gewichtsprozent, bezogen auf den Feststoffgehalt, PVA, insbesondere 2 bis 15 Gewichtsprozent.

Die Menge des PVA richtet sich nach dem gewünschten Mattierungsgrad. Dieser erhöht sich kontinuierlich mit der zugesetzten Menge PVA.

Die erfindungsgemässe Suspension enthält als Bindemittel z.B. solche auf Epoxidharzbasis, Polyurethanharze, Phenol-Formaldehydharze, Harnstoff-Formaldehydharze oder Melamin-Formaldehydharze oder auch Gemische solcher Bindemittel.

Vorzugsweise werden Bindemittel auf Epoxidharzbasis verwendet, insbesondere Epoxidharze mit mehr als einer Epoxidgruppe im Molekül und Härter mit Carboxylgruppen, Säureanhydridgruppen oder phenolischen Hydroxylgruppen. Beispiele für solche Bindemittel sind glycidylierte Bisphenol A-Verbindungen oder Triglycidylisocyanurat und carboxylgruppenendständige Polyester oder Bisphenol A-Novolake.

Übliche in Lacken enthaltene Zusatzstoffe sind beispielsweise Netzmittel, Verlaufsmittel, gegebenenfalls Farbstoffe, Pigmente und Lichtschutzmittel.

Als Netzmittel können bekannte Stoffe verwendet werden, wie Alkylphenyloxyäthylate, Aminokokosfettsäure-oxäthylat u.a.

Verlaufsmittel sind z.B. Polyvinylacetale, wie Polyvinylbutyral («Motival» B 30 H, registriertes Warenzeichen der Hoechst), Polyäthylenglykol, Polyvinylpyrrolidon, Glycerin, Acryl-Mischpolymerisate, wie «Modaflow» oder «Acrylron» MPF (registrierte Warenzeichen der Monsanto bzw. der Protex).

Die wässerige Suspension kann ohne Füllmittel sein und so als Klarlack dienen. Sie kann aber auch Füllmittel, wie Pigmente, die weiss oder farbig sein können und inert in bezug auf die übrigen Lackkomponenten sein müssen, enthalten.

Die Menge der Festkörper in der wässerigen Suspension schwankt im allgemeinen von 15 bis 60 Gewichtsprozent.

Die Grösse der suspendierten Teilchen ist nicht kritisch. Die Korngrösse kann beispielsweise zwischen 0,1 und 50 µm, vorzugsweise zwischen 1 und 20 µm, liegen.

Die erfindungsgemässe Suspension kann vorteilhaft dadurch hergestellt werden, dass man einer wässerigen Suspension, welche Bindemittel und in Lacken übliche Zusatzstoffe sowie gegebenenfalls Füllmittel, wie Pigmente, enthält, PVA mit einem Molekulargewicht von 1000 bis 100 000 zugibt und darin löst.

Die Suspension kann auch dadurch hergestellt werden, dass man Bindemittel und in Lacken übliche Zusatzstoffe sowie gegebenenfalls Füllmittel in eine Lösung von PVA gibt.

Eine weitere Möglichkeit zur Herstellung der erfindungsgemässen Suspension besteht darin, dass man PVA in das Bindemittel einschmelzt und die so erhaltene Masse in bekannter Weise zu einer Suspension aufarbeitet. Eine solche Suspension bewirkt in der Regel eine geringere Mattierung als die in der vorstehend erwähnten Weise hergestellte Suspension.

Die Erfindung betrifft auch die Verwendung der erfindungsgemässen Suspension zur Herstellung matter Überzüge auf Oberflächen, insbesondere solchen von Glas oder Metallen, vorzugsweise von Stahl, aber auch von Aluminium und Weissblech.

Die Applikation kann in bekannter Weise nach einem Auftragsverfahren, wie Tauchen, Spritzen, Streichen, Walzen usw., erfolgen. Anschliessend wird der Lack durch Trocknen und Härten, vorzugsweise bei höheren Temperaturen (z.B. bei 100 bis 200°C), eingebrannt.

Überraschenderweise erreicht man beim Zusetzen von PVA zu trockenen Pulverharzen keinen Mattierungseffekt.

In den folgenden Beispielen wird die Matierungswirkung als Glanzgrad gemäss DIN 67 530 gemessen.

Beispiel 1

Eine Mischung aus 84 g Triglycidylisocyanurat, 916 g eines gesättigten Polyesters mit endständigen Carboxylgruppen (Säurezahl: 35, Schmelzpunkt: 65°C), 505 g TiO$_2$ sowie 10 g eines für Beschichtungspulver marktüblichen Verlaufsmittels («Modaflow», registriertes Warenzeichen der Monsanto) werden in einem Ko-Kneter (Firma Buss, CH) zusammengeschmolzen. Das Material wird anschliessend gemahlen (Korngrösse <100 µm) und in 1815 g Wasser suspendiert. Diese Aufschlämmung wird in einer Perlmühle weiter gemahlen, bis die durchschnittliche Teilchengrösse etwa 10 µm beträgt. Darauf werden der Suspension bei Raumtemperatur und unter Rühren 76 g Polyvinylalkohol (PVA) mit einem durchschnittlichen Molekulargewicht (MG) von 22 000 zugegeben und darin gelöst. Die so erhaltene Suspension wird mit einer Lackspritzpistole auf ein gereinigtes Stahlblech aufgespritzt. Nach einer Ablüftzeit von etwa 15 Minuten wird das beschichtete Blech während 10 Minuten auf 200°C erhitzt. Es entsteht ein 50 bis 60 µm dicker Lackfilm mit einem Glanzgrad von 40%, völlig glatter Oberfläche und ausgezeichnetem Verlauf.

Gibt man zur Suspension anstelle von 76 g PVA 152 g PVA, so entsteht ein Film mit einem Glanzgrad von 4,5% und mit im übrigen gleich guten Eigenschaften.

Ein vergleichsweise ohne Zusatz von PVA hergestellter Film weist einen Glanzgrad von 95% auf, ferner eine bei Pulverlacken übliche orangenschalenartige Oberflächenstruktur.

Beispiel 2

Man verwendet als Bindemittel anstelle von Triglycidylisocyanurat und der im Beispiel 1 genannten Polyestermenge 650 g eines festen Bisphenol A-Epoxidharzes mit einem Epoxidgehalt von 0,5 bis 0,6 Mol/kg und 350 g eines gesättigten Polyesters mit endständigen Caboxylgruppen (Säurezahl: 60, Schmelzpunkt: 100–110°C) und verfährt im übrigen wie in Beispiel 1 beschrieben, wobei man wechselnde Mengen PVA mit z.T. verschiedenem Molekulargewicht (MG) einsetzt.

Die Eigenschaften der so erzeugten Filme auf Stahlblechen sind zusammen mit den Werten eines Vergleichsversuches aus der folgenden Tabelle ersichtlich:

| PVA-MG | PVA-Menge | Glanzgrad des Films | Oberflächenstruktur des Films |
|---|---|---|---|
| 22 000 | 30 g | 96% | gering orangenschalenartig |
| 22 000 | 76 g | 10% | glatt |
| 15 000 | 76 g | 20% | glatt |
| 72 000 | 76 g | 10% | glatt |
| 22 000 | 227 g | 3% | etwas rauh |
| – | 0 g | 102% | ausgeprägt orangenschalenartig |

Beispiel 3

Eine Mischung von 471 g eines Bisphenol A-Epoxidharzes mit einem Schmelzpunkt von 78°C und einem Epoxidgehalt von 1,3 Mol/kg, 85 g eines Bisphenol A-Novolaks mit einem Erweichungspunkt von 85 bis 90°C und einem OH-Äquivalentgewicht von 120, 3 g eines Verlaufsmittels («Acrylron» MPF, registriertes Warenzeichen der Protex), 1,3 g Imidazol und 120 g TiO$_2$ sowie 120 g Schwerspat werden wie in Beispiel 1 beschrieben zu einer wässerigen Suspension verarbeitet, welcher man 40 g PVA mit einem MG von 22 000 zufügt und darin auflöst. Der so erhaltene Lack wird auf ein Stahlblech aufgespritzt und während 30 Minuten bei 150°C eingebrannt. Man erhält einen glatten Film mit gutem Verlauf und einem Glanzgrad von 50%.

Gibt man anstelle von 40 g PVA 80 g PVA zu und verfährt im übrigen in gleicher Weise, so erhält man einen glatten Film mit gutem Verlauf und einem Glanzgrad von 10%.

Ein vergleichsweise ohne PVA hergestellter Film weist eine charakteristische Orangenschalenoberflächenstruktur auf und hat einen Glanzgrad von 102%.

Beispiel 4

Eine Mischung von Harz, Härter und Verlaufsmittel wie in Beispiel 1 beschrieben wird ohne Zusatz von TiO$_2$ zusammengeschmolzen, gemahlen und in 2020 g Wasser suspendiert. Man geht weiter vor wie in Beispiel 1 beschrieben und erhält auf einer Glasplatte einen durchscheinenden Lackfilm von milchglasartigem Aussehen.

Beispiel 5

650 g eines festen Epoxidharzes auf Bisphenol A-Basis mit einem Epoxidgehalt von 0,5 bis 0,6 Mol/kg, 350 g eines gesättigten Polyesters mit endständigen Carboxylgruppen (Säurezahl: 60, Schmelzpunkt: 100–110°C), 505 g TiO$_2$ sowie 10 g «Modaflow» werden zusammen mit 76 g PVA (MG = 22 000) im Ko-Kneter geschmolzen. Das anschliessend gemahlene Produkt wird in 1815 g Wasser suspendiert und in der Perlmühle weiter gemahlen, bis die durchschnittliche Teilchengrösse etwa 10 µm beträgt. Man beschichtet damit wie in Beispiel 1 beschrieben ein Stahlblech und erhält einen Film mit glatter Oberfläche und ausgezeichnetem Verlauf. Der Glanzgrad ist 75%.

**Patentansprüche**

1. Wässerige Suspension zur Herstellung von matten Überzügen, enthaltend härtbares Bindemittel und für Lacke übliche Zusatzstoffe sowie gegebenenfalls Füllstoffe, dadurch gekennzeichnet, dass sie als Mattierungsmittel einen Polyvinylalkohol mit einem Molekulargewicht von 1000 bis 100 000 gelöst enthält.

2. Suspension gemäss Patentanspruch 1, dadurch gekennzeichnet, dass sie einen Polyvinylalkohol mit einem Molekulargewicht von 5000 bis 50 000 enthält.

3. Suspension gemäss Patentanspruch 1, dadurch gekennzeichnet, dass sie 1 bis 20 Gewichtsprozent, bezogen auf den Feststoff, eines Polyvinylalkohols enthält.

4. Suspension gemäss Patentanspruch 3, dadurch gekennzeichnet, dass sie 2 bis 15 Gewichtsprozent, bezogen auf den Feststoff, eines Polyvinylalkohols enthält.

5. Suspension gemäss Patentanspruch 1, dadurch gekennzeichnet, dass sie ein Bindemittel auf Epoxidharzbasis enthält.

6. Suspension gemäss Patentanspruch 5, dadurch gekennzeichnet, dass sie als Bindemittel ein Epoxidharz mit mehr als einer Epoxidgruppe im Molekül und eine Carboxylgruppen, Säureanhydridgruppen oder phenolische Hydroxylgruppen enthaltende Verbindung aufweist.

7. Suspension gemäss Patentanspruch 1, dadurch gekennzeichnet, dass sie Pigmente als Füllmittel enthält.

8. Verwendung der Suspension gemäss einem der Patentansprüche 1-7 zur Herstellung matter Überzüge auf Oberflächen, insbesondere von Glas oder Metallen.

## Claims

1. An aqueous suspension for producing matt coatings, which suspension contains a curable binder, customary additives for lacquers and optionally fillers, and is characterised in that it contains as matting agent, dissolved in the aqueous phase, a polyvinyl alcohol having a molecular weight of 1000 to 100,000.

2. A suspension according to Claim 1, which contains a polyvinyl alcohol having a molecular weight of 5000 to 50,000.

3. A suspension according to Claim 1, which contains 1 to 20 per cent by weight, relative to the solid content, of a polyvinyl alcohol.

4. A suspension according to Claim 3, which contains 2 to 15 per cent by weight, relative to the solid content, of a polyvinyl alcohol.

5. A suspension according to Claim 1, which contains a binder based on epoxide resin.

6. A suspension according to Claim 5, which contains as binder an epoxide resin having more than one epoxide group in the molecule, and a compound containing carboxyl groups, acid anhydride groups or phenolic hydroxyl groups.

7. A suspension according to Claim 1, which contains pigments as fillers.

8. Use of a suspension according to any one of Claims 1-7 for producing matt coatings on surfaces, particularly on glass or metal surfaces.

## Revendications

1. Suspension aqueuse pour la réalisation de revêtements mats, qui contient un liant durcissable, des additifs usuels pour peintures ou vernis et, éventuellement, des charges, et qui est caractérisée en ce qu'elle contient à l'état dissous, comme agent délustrant, un poly-(alcool vinylique) ayant un poids moléculaire de 1000 à 100 000.

2. Suspension selon la revendication 1, caractérisée en ce qu'elle contient un poly-(alcool vinylique) ayant un poids moléculaire de 5000 à 50 000.

3. Suspension selon la revendication 1, caractérisée en ce qu'elle contient de 1 à 20% en poids d'un poly-(alcool vinylique) relativement à la matière solide.

4. Suspension selon la revendication 3, caractérisée en ce qu'elle contient de 2 à 15% en poids d'un poly-(alcool vinylique) relativement à la matière solide.

5. Suspension selon la revendication 1, caractérisée en ce qu'elle contient un liant à base d'une résine époxydique.

6. Suspension selon la revendication 5, caractérisée en ce qu'elle contient, comme liant, une résine époxydique renfermant plus d'un radical époxy dans sa molécule et un composé porteur de radicaux carboxy, de radicaux anhydride d'acide ou de radicaux hydroxy phénoliques.

7. Suspension selon la revendication 1, caractérisée en ce qu'elle contient, comme charges, des pigments.

8. Application d'une suspension selon l'une quelconque des revendications 1 à 7 à la réalisation de revêtements mats sur des surfaces, en particulier sur des surfaces de verre ou de métaux.